# EUROPEAN PATENT SPECIFICATION

(11) **EP 2 664 045 B1**
(45) Date of publication and mention of the grant of the patent: **22.07.2015**
(21) Application number: 11720542.7
(22) Date of filing: 23.05.2011
(51) Int. Cl.: H02H 3/06, H02H 7/26

(54) **METHOD FOR OPERATING A RECLOSER**
VERFAHREN FÜR DEN BETRIEB EINES RECLOSERS
PROCÉDÉ DE FONCTIONNEMENT D'UN RÉENCLENCHEUR

(30) Priority: 08.04.2011 US 201161473478 P
(43) Date of publication of application: 20.11.2013
(73) Proprietor: ABB Research Ltd., 8050 Zürich (CH)
(72) Inventor: MOHAGHEGHI, Salman, 80230 Denver (US); OUDALOV, Alexandre, CH-5442 Fislisbach (CH); STOUPIS, James, Durham 27703 (US); ISHCHENKO, Dmitry, 27518 Cary (US)
(74) Representative: ABB Patent Attorneys
(86) International application number: PCT/EP2011/058314
(87) International publication number: WO 2012/136274

(56) References cited:
- EP-A2- 1 014 526
- GB-A- 2 390 768

## Description

### FIELD OF THE INVENTION

The invention relates to the field of distribution of electrical energy. In particular, the invention relates to a method for operating a recloser of an electrical power distribution network, a computer-readable medium, a program element, and a system for operating a recloser.

### BACKGROUND OF THE INVENTION

Power distribution networks are used for transferring electrical power from a number of electrical power generation facilities to a plurality of electrical power consumers. Usually, every large-scale power distribution network has a protection system which is adapted to disconnect parts of the distribution network from the rest of the distribution network in the case of a fault. For example, in the case of short-circuit of a line the line has to be disconnected from the distribution network such that the remaining parts of the distribution network may continue with their functionality.

However, most faults in, for example overhead-line-based, distribution networks are often temporary in nature (e.g. lightning strikes, falling tree branches). The protection system may be designed to open a line circuit in an attempt to clear the fault at the current zero crossing of the alternating current distributed by the distribution network and then automatically reclose the line circuit to reconnect the line circuit once the fault has cleared. For example, two circuit breakers at the end of the line circuit may be opened and reclosed. A typical auto-reclosure dead-band in medium voltage distribution networks (i.e. 1 kV to 50 kV) is in the range of 200 to 300 ms (milliseconds).

In conventional large-scale power generation and distribution system comprising such a distribution network, a relative small number of large-scale power plants and a relative large number of power consumers are connected to the distribution network.

Nowadays, distributed generation of electrical energy and distributed power sources (especially renewable energy sources) like photovoltaic systems, small scale hydroelectric power generators, wind turbines and/or gas turbines using biogas become more and more important. Such distributed power sources may be connected to the distribution network in a large number and at every possible point of the distribution network.

However, distributed power sources may be rather incompatible with present (i.e. conventional) utility reclosing practices since distributed power sources may prevent the arc extinction by feeding the fault and hence a temporary fault may become a permanent fault.

Also, during the circuit breaker open time of the reclosing sequence, some kinds of distributed power sources like synchronous generators usually may tend to drift away from the synchronism with respect to the network. Thus, a reconnection, which is made without synchronization, may cause serious damages to these kinds of distributed power sources, as well as may create an over-current and an over-voltage situation in the distribution network.

EP1014526 A2 discloses a method for operating a recloser of an electrical power distribution network, the power distribution network interconnecting a main power source and distributed power sources, the method comprising the steps of detecting a fault on a line, line section or busbar of the electrical power network, and disconnecting the faulty line, line section or busbar. The method further comprises the steps of measuring voltages from the disconnected line, line section or busbar, forming parameters describing the state of the disconnected line, line section or busbar from the measured voltages, and concluding, on the basis of the parameters, the disappearance or possibility of disappearance of the fault of the disconnected line, line section or busbar. The delay time of the recloser of the disconnected line, line section of busbar is adjusted accordingly.

### DESCRIPTION OF THE INVENTION

It may be an objective of the invention to provide a fault protection system for a power distribution network that is capable of handling distributed power generation.

This objective is achieved by the subject-matter of the independent claims. Further exemplary embodiments are evident from the dependent claims and the following description.

A first aspect of the invention relates to a method of operating a recloser of an electrical power distribution network.

A recloser may be a circuit breaker that is adapted to connect and disconnect an electrical line. For example, a recloser may be automatic in the sense that, when it receives a fault message, it disconnects the electrical line and reconnects the line after a specific delay or reclosing time has expired or lapsed.

The power distribution network may interconnect a main power source, for example an electrical substation or a large scale power plant, and distributed power sources. The power distribution network may be an overhead-line-based distribution network. The power supplied by the distributed power sources may amount to at least 5 to 10% of a total power of the power distribution network.

The recloser may be an upstream recloser (with respect to the distributed power source) located in-between the main power source and the distributed power sources.

According to a preferred embodiment of the invention, the method comprises the steps of: determining states of the distributed power sources, and upon occurrence of a fault in the network that causes the recloser to open, modifying the reclosing time of the recloser dependent on the states of the distributed power sources. The fault may be a transient, non-permanent fault, i.e. a fault which may be eliminated by opening the recloser.

Every distributed power source may be associated with a circuit breaker which may disconnect the distributed power source from the power distribution network in the case of a fault. However, the disconnection of a distributed power source may not be immediate but may be delayed, for example to comply with norms like FRT (see below). With the method, the time delay between the opening and the closing of the recloser may be determined in such a way, that all distributed energy sources that may feed the fault will be disconnected from the power distribution network during the delay time. In such a way, a non-permanent fault may be eliminated in a power distribution network comprising distributed power sources.

The delay time or reclosing time of the recloser may be set by adjusting a parameter in a controller of the recloser. A recloser controller may have several adjustable delay time parameters. They typically may be set to any number between 0.1 and 180+ sec with time intervals of 0.01 sec. Usually, the values are assigned during the design stage and are not modified afterwards. Although, it may be possible to switch between different values depending on specific conditions (line residual voltage level, load level, etc). Thus, the method may be applied to systems with conventional recloser controllers.

According to the preferred embodiment of the invention, the state of a distributed power source indicates whether the distributed power source is actually connected to the power distribution network, i. e. the state may indicate the connectivity of the distributed power sources. With the method, an algorithm for adapting the auto-reclosing sequence based on the connectivity and the state of the distributed power sources in the distribution network may be implemented.

According to an embodiment of the invention, the method comprises the steps of: determining the state of a distributed power source by a controller of the distributed power source, and sending the state of the distributed power source with a message over a data communication network to a central controller. For example, the central controller may be comprised by a substation computer. The communication network may be a LAN, WAN or VPN. The message may be sent via the GOOSE control block.

According to an example, the method comprises the steps of: determining a reclosing time for the recloser by a central controller, delaying the reclosing by sending a closing message to a controller of the recloser, the closing message indicating the reclosing time. Also, the closing message may be sent over the communication network. The reclosing of the recloser may be triggered by the receiving time of the closing message. However, the closing message may comprise the delay time or the time point of reclosure, which may be evaluated by the controller of the reclosure. It has to be understood, that a closing message may be every signal that indirectly or directly commands the closing of the receiver of the closing message.

There are several possibilities, how the reclosing of the recloser will be delayed by the central controller. The reclosing may be triggered by messages of the distributed power sources, by the state of distributed power sources or by a topological model of the power distribution network that is estimated from the states of the devices of the power distribution network.

According to an example, the reclosing of the recloser is delayed until the state of every distributed power source indicates that the distributed power source is disconnected from the power distribution network. For example, the central controller may wait until it receives messages from all distributed power sources feeding the fault that they are disconnected from the power distribution network.

According to an example, the reclosing of the recloser is delayed for a minimum delay time determined from the states of the distributed power sources. In contrast to a conventional recloser with a preset delay time or dead time, the recloser (or in particular the controller of the recloser) may receive a message with information about a variable delay time and may initiate the reclosing after the delay time has passed after the opening of the recloser.

According to an example, the method comprises the steps of: determining from the states of the distributed power sources, whether at least one distributed power source is connected to the power distribution network; and setting the minimum delay time to a global maximum connect time of the distributed power sources, if at least one distributed power source is connected to the distribution network. The state of a distributed power source may comprise whether the distributed power source is actually connected to the power distribution network or not. For example, due to the fault, the distributed power source already may be disconnected from the power distribution network. However, in the case of a fault, a distributed power source may not be disconnected from the power distribution network immediately.

For example, distribution network operators have started to introduce new requirements referred to as "fault ride through" (FRT). FRT requires that a distributed power source connected to a medium voltage network must remain connected through a temporary fault scenario for a specific time to provide post-fault voltage support. Therefore, the global maximum connect time may set to the FRT maximum connect time, which may be about 1 to 1.5 sec.

According to the preferred embodiment of the invention, the method further comprises the steps of: determining states of switching devices of the power distribution network; determining an actual topology of the power distribution network from the states of the distributed power sources and the states of the switching devices. The actual topology of the power distribution network may comprise a connectivity model of the power distribution network, i. e. which lines of the network are electrically connected to the network and which are not.

Additionally, the actual topology may comprise information about the electrical power distributed by the different lines of the power distribution network, the voltage and currents at specific points of the power distribution network, and the power fed into the network by the main power source and the distributed power sources as well as the power consumed by the consumers connected to the network.

The central controller, for example a substation computer, may comprise software modules for determining the actual topology. This engine for determining the actual topology may be loaded into the central controller without changing its hardware.

In the case of a fault, the actual topology of the power distribution network may comprise also the point of the fault, i. e. which line is disconnected or has a short-circuit.

A switching device may be a recloser, a circuit breaker or in general every switch that is adapted to disconnect a line of the power distribution network.

The state of the switching device, for example whether the switching device is opened or closed, may be determined by a controller of the switching device, which may send the message over a data communication network to a central controller. The central controller then may determine the actual topology of the power distribution network from the states of the distributed power sources and the states of the switching devices.

According to an example the method comprises the steps of: estimating a residual voltage of the power distribution network at each distributed power source from the actual topology of the power distribution network; determining a minimum connect time for each of the distributed power sources from the residual voltage, and setting the minimum delay time to the longest minimum connect time. From the actual topology of the power distribution network, the central controller may estimate or calculate the residual power at the feeding point of each distributed power source. For example, from the residual voltage, the central controller may estimate how long the distributed power source will be connected to the network according to a FRT minimum connect time, which may be then set to the minimum connect time of the respective distributed power source.

According to an example, the method comprises the steps of: determining the open paths from the recloser to a distributed power source from the actual topology; and estimating the residual voltage at the distributed power source dependent on the open paths.

According to an embodiment of the invention, the state of the distributed powers source comprises fault data, the fault data indicating, whether there is a fault in the network at the distributed power source, wherein the reclosing of the recloser is delayed until all states of the distributed power sources indicate no fault. Alternatively, the central controller may wait until all distributed power sources send messages that the fault has been eliminated from their point of view, and will then send a message to the recloser to reclose again.

However, in this case, the distributed power sources, or in particular their controllers, may have to be able to generate messages or signals about their fault state. These messages may be generated by evaluating data about the electrical network at the distributed power source.

According to an embodiment of the invention, the fault data is determined by: measuring the current and/or voltage at the connection point of the distributed power source with the power distribution network, setting the fault data to indicating a fault, when a change in the current and/or voltage has been detected that exceeds a predefined change rate. The measurement data may already be present in a controller of the distributed power source that monitors the output of the distributed power source. In this controller, a further software module may be implemented which calculates the change rate of the voltage and/or the current, estimates the occurrence of a fault and, for example, sends periodically messages to the central controller about the fault state at the distributed power source. The fault data may simply indicate that there is a fault or not, and may be simply coded into a single bit of the message.

All steps of the method for indicating a fault may be performed by a controller of the distributed power source. The controller may generate a message with the fault data and may send this message to the central controller.

Therefore, a further aspect of the invention relates to a method for indicating the presence of a fault at the distributed power source. This may help the engine at the substation computer to use this information to close, delay or block the reclosing action.

A further aspect of the invention relates to a computer-readable medium, in which a computer program for operating a recloser is stored, which, when being executed by a processor, is adapted to carry out the steps of the method as described in the above and in the following.

A computer-readable medium may be a floppy disk, a hard disk, an USB (Universal Serial Bus) storage device, a RAM (Random Access Memory), a ROM (Read Only memory), an EPROM (Erasable Programmable Read Only Memory), and a solid state drive. A computer readable medium may also be a data communication network, e.g. the Internet, which allows downloading a program code.

A further aspect of the invention relates to a program element for operating a recloser, which, when being executed by one or more processors, is adapted to carry out the steps of the method as described in the above and in the following. A program element may comprise a software module or a plurality of software modules that may be loaded onto controllers of a system for executing the method. The controllers may comprise memory for storing the software modules and a processor for executing the software modules.

A further aspect of the invention relates to a use of a method as described in the above and in the following for operating a recloser of an electrical power distribution network in which a power supplied by distributed power sources is at least 5% to 10%, in particular at least 20% to 25%, of a total power of the power distribution network.

A further aspect of the invention relates to a system for operating a recloser of an electrical power distribution network. It has to be understood that features of the method as described in the above and in the following may be features of the system as described in the above and in the following and vice versa.

According to another preferred embodiment of the invention, the system comprises local controllers for determining states of the distributed power sources and states of switching devices of the power distribution network, a central controller for receiving the states of the distributed power sources and states of switching devices of the power distribution network from the local controllers, and a recloser controller for detecting the occurrence of a fault in the network and causing a recloser to open, wherein the central controller is adapted for determining a minimum delay time for delaying the reclosing of the recloser dependent on the states of the distributed power sources and for sending a message indicating the delay time to the recloser controller, wherein the state of a distributed power source indicates whether the distributed power source is connected to the power distribution network, wherein the central controller is further adapted to determine an actual network topology of the power distribution network from the states of the distributed power sources and the states of the switching devices of the power distribution network, estimate a residual voltage of the power distribution network at each distributed power source from the actual topology of the power distribution network, determine a minimum connect time for each of the distributed power sources from the residual voltage, and set the minimum delay time to the longest minimum connect time.

Summarized, a method for the adaptive auto-reclosing by monitoring the connectivity of the distributed power sources is provided. The information about the state of distributed power sources and switches (for example feeder circuit breakers) may be put on a communication bus and may be received at a substation computer. After receiving this information, a local feeder connectivity model may be updated and the substation computer may adjust the delay time intervals of the reclosers accordingly, by taking into account the Fault Ride Through (FRT) operation of the distributed power sources.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a power distribution network according to an embodiment of the invention.
Fig. 2 shows a diagram with a FRT characteristic.
Fig. 3 shows a system for operating a recloser according to an embodiment of the invention.
Fig. 4 shows a flow diagram for operating a recloser according to an embodiment of the invention.
Fig. 5 shows a flow diagram for generating fault messages according to an embodiment of the invention.
Fig. 6 shows a system for operating a recloser according to a further embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

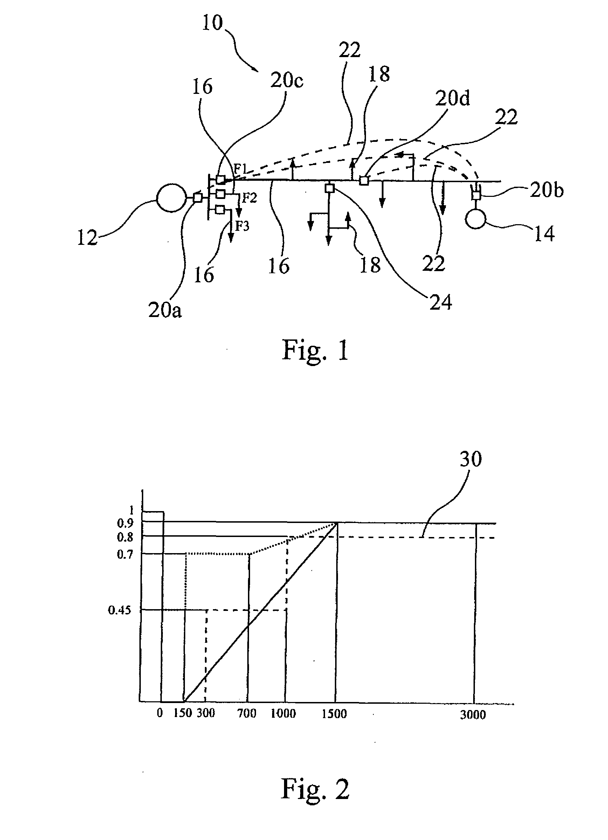

Fig. 1 schematically shows a power distribution network 10, to which a main power source 12 and a distributed power source 14 are connected. The distribution network 10 comprises a plurality of distribution feeders 16 connected to a substation, which are used for supplying a large number of power consumers 18 indicated by arrows in Fig. 1. The power distribution network comprises a circuit breaker 20a for disconnecting the main power source 12 from the network 10, a circuit breaker 20b for disconnecting the distributed power source 14 from the network, a recloser 20c for disconnecting the distribution feeder 16, and a recloser 20d for disconnecting a part of the distribution feeder 16 from the network 10.

It has to be understood that the power distribution network 10 may comprise a large number of distributed power sources 14 and not only one as indicated in Fig. 1.

The power distribution network 10 comprise further switching devices 24, which influence the actual topology of the power distribution network 10, i. e. the paths or lines of the network 10 that are electrically connected to the network 10.

A typical (conventional) utility approach to avoid an islanded operation of the distributed power source 14 and a backfeeding of a fault is to send a trip signal 22 (disconnect signal) to the distributed power source 14, which is faster than a breaker reclose time and to trip (open) the circuit breaker 20b at the site of the distributed power source 22 upon reception of the trip signal. Fig. 1 shows that the trip signal may be sent by the circuit breaker 20a and the reclosers 20c, 20d to the circuit breaker 20b. For example, every time a switch 20a, 20c, 20d receives an error signal and opens, also a trip signal 22 is sent to the circuit breaker 20b to disconnect the distributed power source from the distributed power network 10.

However, if the distributed power source 14 is disconnected for all fault conditions (e.g. when the fault is on the parallel feeder), this may lead to severe voltage and dynamic stability concerns after fault clearing at a high penetration level of distributed power sources (above 20-25% of the total feeder power). Therefore, distribution network operators (especially in countries with large amount of distributed power sources like Germany) have started to introduce new requirements referred to as "fault ride through" (FRT), "low voltage ride through" (LVRT) or "zero voltage ride through" (ZVRT).

FRT requires that a distributed power source 14 connected to a medium voltage network 10 must remain connected through a temporary fault scenario for a specific time to provide post-fault voltage support.

Fig. 2 shows a diagram with a FRT V-t characteristic 30 which depicts how long a distributed power source 14 has to remain connected to the network 10 at a certain residual voltage level. The x-axis of the diagram shows the time in ms how long the distributed power source 14 has to remain connected to the network 10, the y-axis shows the residual voltage level in normalized units.

Hence, the farther away from the fault (and the higher the distributed generation penetration level), the higher the residual voltage at the distributed power source 14, and the longer the distributed power source 14 has to remain connected.

For example, there may be a fault in the feeder 16 downstream of the recloser 20c. Due to the fault, the recloser 20c opens. Also the controller of the distributed energy source 14 detects the fault and decides to disconnect the distributed power source 14 from the network 10. However, due to FRT, the distributed power source has to be connected to the network 10 for a specific time. A central controller in the substation computer of the substation 12 may gather, determine or estimate this information and may estimate a delay time or recloser delay time after which it may be safe to reclose the recloser 20c again.

The reclosure delay time, i. e. the time the recloser 20c is opened, is then set to exceed the longest connect time of each distributed power source 14, such that no desynchronization problem at the recloser 20c and no backfeeding the fault occurs.

For example, coordination between the FRT and an undevoltage protection relay may require a delay of 250 to 300 ms in the case when the voltage drops too close to 0. In case of a high penetration level of distributed power sources 14, the feeder voltage during the temporary faults (usually impedance faults) can be supported at a relatively high level and prolong the disconnection delay up to 1 sec. Thus it is preferred to adjust the reclosing (dead band) time (a typical value as indicated above is 200 to 300 ms) depending on the connectivity of the distributed power source 14.

In particular, for a power distribution network 10 with a high penetration level of distributed power sources 14, the distributed power sources 14 may have to stay connected to the network 10 during a fault in order to provide Fault Ride Through (FRT) capabilities and prevent the network 10 from total collapse.

Cases can be imagined where some switches, for instance the reclosers 20c, 20d connected upstream of the fault (towards the network 10), may trip (open) because of the excessive fault current, but the downstream distributed power source 14 continues feeding the fault. This may specifically happen if the distributed power source 14 is inverter-based, which automatically limits the fault current injection to 1.2-1.5 p.u of the rated current which might not be high enough to trip the associated overcurrent relays. For other types of distributed power sources 14, if the control mode changes from PQ (active/reactive Power) to PV (frequency/voltage) mode, then the distributed power source 14 may be able to maintain the voltage while contributing to the fault current. (For PQ mode, the voltage at the terminals of the distributed power source 14 will start decreasing rapidly and the undervoltage relays will ultimately trip the recloser 20d.

Of course, it should be noted that even with FRT capabilities, the distributed power source 14 may not be able to bring the voltage high enough to avoid a trip by the undervoltage relay if the fault is not isolated in a reasonable time <500-700 ms. In this case, the undervoltage relay would normally trip the recloser 20d.

A problem may happen when a fault occurs in the network 10 and the upstream recloser 20c, 20d isolates the fault from the network 10. However, the downstream distributed power source 14 continues feeding the fault. With the distributed power source 14 still connected to the network 10, if the recloser 20c, 20d closes the contacts, this action will short circuit the network side, which will cause extra damage to the recloser 20c, 20d and excessive stresses on the generators and other equipment, for example the substation 12. Therefore, it is desired to have a mechanism that prevents the recloser 20c, 20d from switching under these circumstances, or modifies the settings so as to delay its operation.

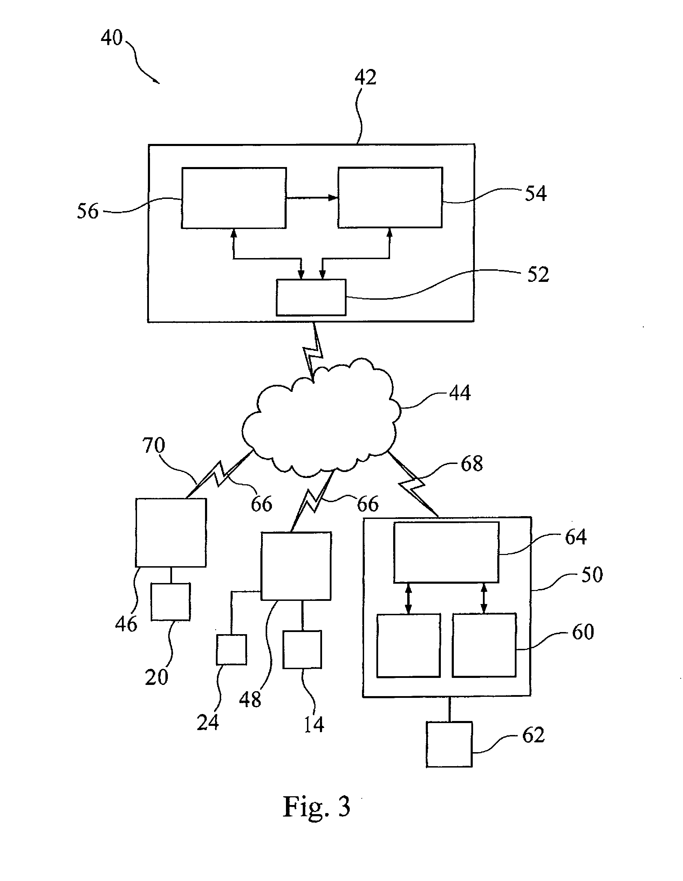

Fig. 3 shows a system 40 for operating a recloser 20. The system comprises a central controller 42, a communication network 44, controllers 46 of reclosers 20c, 20d, controllers 48 of other devices like distributed power sources 14 and further switching devices 24, and a controller 50 for measuring the current/voltage at a distributed power source 14. The controllers 48 may be IEDs (intelligent electronic devices) of distributed power sources or other field IEDs. In general, a controller may be any electronic device with a processor that is able to exchange information with a further device.

The central controller 42 may comprise or may be a substation computer 52 of the substation 12. The substation computer 52 may be a COM600 or any similar device. The controller 42 hosts the algorithm for adjusting the delay time(s) of the recloser(s), i.e. a recloser adaption engine 54, and network connectivity model 56 of the network 10, i.e the actual topology of the network 10.

The network connectivity model 56 or actual topology 56 may be a simplified model of the power distribution network 10 that shows what devices are connected to the network 10 and also indicates the states of the lines, switches, reclosers and circuit breakers. Essentially, it may be a graph-based model of the network 10 where the links represent lines and nodes represents buses. The model may also show switches/reclosers/circuit breakers along each line section of the network 10.

The recloser adaptation engine 54 may be a software module that may contain the algorithm for adjusting the settings of the reclosers 20.

In general, the substation computer 42 is adapted to receive signals or messages from the controllers 46, 48, 50 (for example field IEDs) from across the system 40 and sends signals (in particular a closing message 70) to the controllers 46 of the reclosers 20 via the communication network 44, which may be a LAN, WAN or VPN network based on the size of the system 40. For example, the GOOSE messaging may be used to send messages between the central controller 42 and the local controllers 46, 48, 50.

The controller 46 is adapted to send state messages 66 to the central controller 42, which indicate the state of the recloser 20, for example whether the recloser 20 is opened or closed or the presence of a fault.

The controller 48 is adapted to send state messages 66 to the central controller 42 which indicates the state of the devices 14, 24, for example, the connection state of the distributed power source 14, other data from the power source 14, or the connection state of a switching device 24.

The controller 50, which may be identical to the controller 48 for a distributed power source 14, comprises measurement modules 60 for controlling voltage/current sensors 62 at the distributed power source 14. The controller 50 comprises further a fault presence indicator message module 64. The software module 64 may be situated on an individual field IEDs (especially the IEDs of the distributed power source 14). The module 64 is adapted to send (fast) messages 68 to the central controller 42 indicating the presence and/or absence of faults.

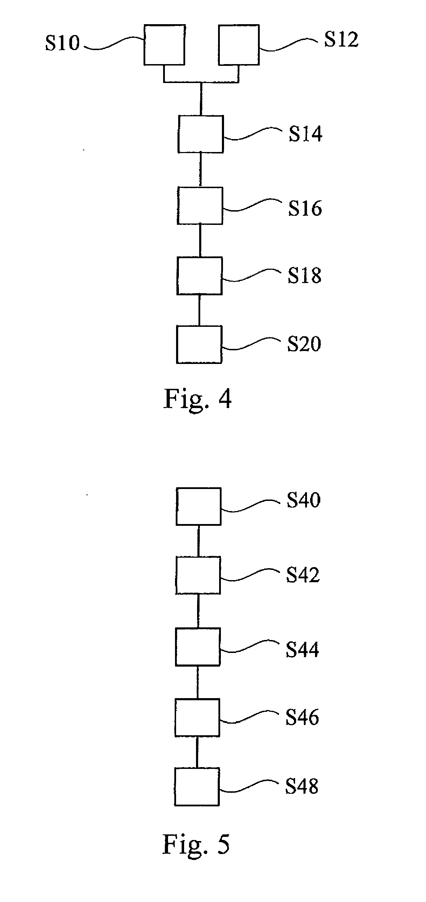

Fig. 4 shows a flow diagram of a method for operating the recloser 20. The algorithms implemented in the controllers, which are therewith adapted to execute the method, may be executed periodically during normal operation of the network 10 and during a fault situation.

During normal operation, the algorithm executes the following steps:

In step S10, a controller 48 sends out a state message 66 with state information about the device 14, 24 to the common communication network 44. This messages may be sent periodically or may be sent when the data contained in a message changes.

For a controller 48, which is connected to the distributed power source 14, this information, i. e. the message 66, may comprise but is not limited to a state (connected, disconnected, standby) of the distributed power source 14, and possibly other general data of the distributed power source 14 (e.g., type, nameplate data, etc).

For another controller 48, the message 66 may comprise state data of the respective device 24, the controller 48 is connected to, for example a switch, circuit breaker or recloser. In these cases, the state data may comprise, whether the switch is opened or closed.

After transport over the communication network 44, the message 66 is received by the central controller 42.

In step S12, the data available from the current/voltage sensors 62 are used by the available measurement IEDs 60 to send a fault message 68 (fast message) indicating the presence/absence of the fault. In the normal operation of the network 10, this message contains the absence of a fault. The method for generation the message 68 will be further explained with respect to Fig. 5.

After transport over the communication network 44, the message 68 is received by the central controller 42.

In step S14, from the messages 66, the connectivity model, i. e. the actual topology, of the network 10 is created/updated in the network connectivity model module 56. This model is fed to the recloser adaptation engine 54.

In step S16, the recloser adaption engine 54 keeps an updated state of the network 10, which may contain the following information: the number of distributed power sources 14 connected to the network 10, the state of breakers, reclosers, switches 20a, 20b, 20c, 20d, the power injected by the distributed power sources 14, the current and voltage measurements at the point of the connection of the distributed power source 14 to the network 10.

During fault operation, i. e. when a fault occurs in the network 10, the algorithms execute the steps described in the following. The method may be executed immediately after the occurrence of the fault. In the following, the differences with respect to the normal operation will be explained.

In step S10, one or more reclosers 20 may trip due to the fault and updated IED data 66 (switch state, state of distributed power sources, etc) is transferred over the communication network 44 to the central controller 42.

In step S 14, the network connectivity model 56 is updated by the central controller 42 based on the latest data 66 from the field IEDs and other devices (including the tripped reclosers).

In step S16, the recloser adaption engine 54 uses the connectivity model 56 of the network 10 and determines the paths from the recloser(s) 20 that have opened up to each distributed power source 14. The more paths exist between a recloser 20 and the distributed power sources 14, the more sensitive the recloser 20 should be, because it means that the chances of reclosing to a fault are higher.

In step S18, the recloser adaption engine 54 modifies the reclose time(s) (i.e. the delay times) of the recloser(s) 20 based on the connectivity model 56 and, in particular, based on the distributed power sources 14 that are connected to the recloser 20 through open network paths. There are several possible ways to do this:

As a first possibility, if the information regarding the FRT capability is included in the nameplate data 66 for the distributed power sources 14 or has somehow been communicated to the central controller 42, the recloser adaption engine 54 ensures that the reclosure time is extended until all the distributed power sources 14 have disconnected.

For example, assume that the default recloser delay time is 250 ms. When distributed power sources 14 are connected to the distribution feeder 16 the delay time will depend on the FRT V-t characteristic 30. For example, in case the voltage drops to 0.2-0.3 p.u (at the point of the connection of the distributed power source 14) the distributed power source 14 will shut down in 300-500 ms, so the recloser delay time might be extended to avoid reclosing to the fault. Otherwise, the reclosing action may short circuit the network 10. If the distributed power sources 14 are disconnected immediately (i.e., no FRT) then the recloser delay time can be set to its minimum value.

As a second possibility, if the information regarding the FRT is not available but real-time fault presence indicator messages 68 (described with respect to Fig. 5) are available from the controllers 50, then the recloser adaption engine 54 relies on these messages 68 to determine whether for each distributed power source 14 the fault has been removed. In this case, when the recloser adaption engine 54 receives the fault presence message 68, it blocks the relevant reclosers 20 from reclosing until the message 68 indicating the absence of fault is received from those controllers 50, in which case the recloser 20 is enabled to close its contacts. This may be necessary because it is possible that the fault is temporary in nature and after the recloser 20 has opened its contacts, the fault is removed and the distributed power source 14 that was not disconnected initially continues feeding the normal network 10.

As a third possibility, if no information on the FRT capability or fault presence/absence is available and the current/voltage measurements are outdated or inaccurate, then the recloser adaption engine 54 makes a best guess according to locally set rules. This may be an increase in the reclose time based on the number of distributed power sources 14 that are electrically connected to the recloser 20 and their types.

In step S20, the central controller 42 sends a closing message 70 over the communication network 44 to the controller 46 of the recloser 20, which actuates the recloser 20 accordingly.

Fig. 5 shows a flow diagram for generating a fault message 68 in step S12 of Fig. 4. The fault message is created by a fault presence indicator module 64 situated in a controller 50 at the distributed power source 14. The module 64 generates a fast message 68 indicating the presence or the absence of a fault. Since it may be not technically possible nor cost-effective to send analog measurement data in real-time to the substation computer 52, the controller 50 sends fast binary messages 68 (similar to GOOSE messages in the context of IEC 61850) indicating whether a fault exists in the network 10 or not. This may be done in the following steps:

In step S40, the controller 50, in particular the modules 60, receives the current/voltage measured by the sensors 62. The current/voltage is compared by the module 64 with the previous values available. This may be done via a local history with limited capacity.

In step S42, If the controller 50 and in particular the module 64 detects a sudden change (the term "sudden" to be detected based on the rate of change in the measured quantity), it flips a bit in the message ("Fault Presence" bit) from 0 to 1. In this case, the controller 50 and in particular the module 60 prepares a fault message 68, indicating the presence of a fault.

In step S44, the module 64 sends the fault message 68 with a multicast fast message (e.g. GOOSE) 68 to the communication network 44, which is then received by the central controller 42.

In step S46, when the module 64 detects a decrease in the measured current or an increase in the measured voltage based on a predefined setting (V/s or A/s thresholds to be set by the user) then it detects that the fault has been removed and changes the bit back to 0. In this case, the module 64 prepares a fault message 68 indicating the absence of a fault.

In step S48, the module 64 sends the fault message 68 in a multicast fast message (e.g. GOOSE) to the communication network 44, which is then received by the central controller 42.

Due to the above described methods, the system 40 for adaptive auto-reclosing has the following characteristics: The system 40 is able to detect the number and preferably type of distributed power sources 14 connected to the network 10 at each point in time. The system 40 is able to determine the connectivity of the distributed power sources 14 during a fault. The system 40 is able to either provide new delay time settings for the reclosers 20 or block their operation completely.

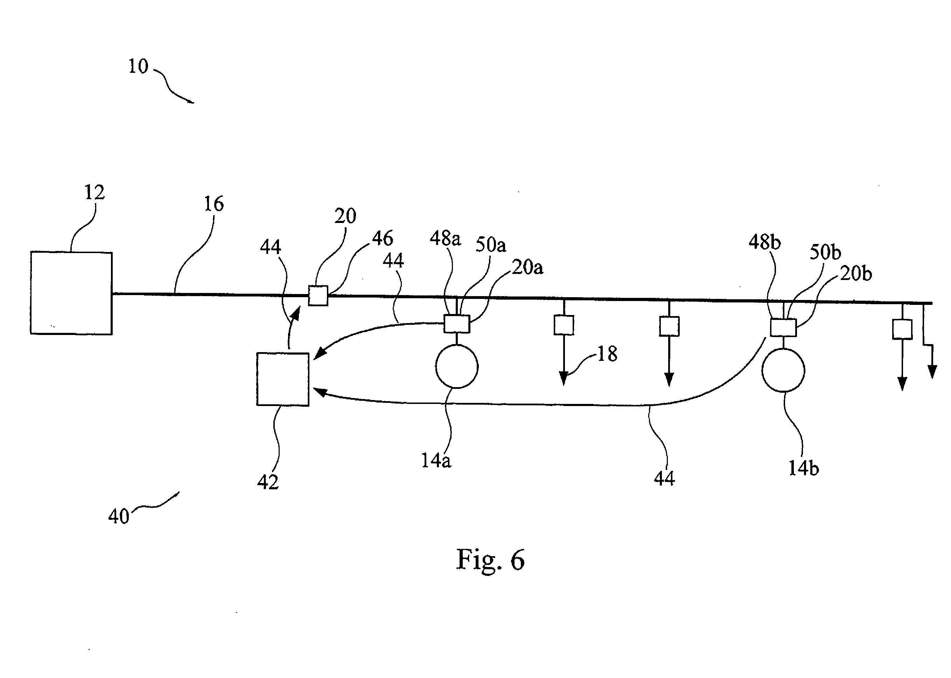

Further example of a method for reopening a recloser will be explained with respect to Fig. 6.

Fig. 6 shows a further system 10 with a main power source 12 and a distribution feeder 16 which is connected to distributed power sources 14a, 14b. Every distributed power source 14a, 14b is connected over a circuit breaker 20a, 20b to the feeder 16 and has controllers 48a, 48b, 50a, 50b, respectively.

A recloser 20 is situated upstream of the distributed power sources 14a, 14b between the distributed power sources 14a, 14b and the main power source 12.

The communication between the local controllers 46, 48a, 48b, 50a, 50b and the central controller 42 may be analogously to the communication described with respect to the previous figures.

According to a first example of the method, the state of the distributed power sources 14a, 14b is reported to the central controller 42 over the communication link 44, which may be a communication network 44. In case at least one distributed power source 14a, 14b is connected to the feeder 16, the central controller 42 increases the delay time of the recloser 20 to the maximum time of the FRT curve 30, for example 1.5 sec in Germany. In case all distributed power sources are already off, the delay time is set to the minimum reclosing time. The central controller 42 may set the delay time of the recloser 20 by sending it over a communication link 44 to the controller 46 of the recloser 20.

According to a second example, the state of the distributed power sources 14a, 14b is reported to the central controller 42 over the communication link 44. When the fault is detected (recloser 20 is open) the fault location and type is detected by the central controller 42. The residual voltage at the terminals of the distributed power sources 14a, 14b, can be estimated (feeder parameters are known) by the central controller 42 (see steps S 14 to S18 above) and thus the time each distributed power source must remain connected is obtained from FRT curve 30 by the central controller 42. The recloser delay time is adjusted to be above the maximum time by the central controller 42. In case all distributed power sources are already off, the delay time is set to the minimum reclosing time. In this embodiment, an adaptive delay time is set for the reclosing time.

According to a third example, the state of the distributed power sources 14a, 14b is reported to the central controller 42 over the communication link 44. When a fault will appear the module 64 will detect the fault (rate of change/magnitude of voltage and current) and send a message 68 with the fault presence indicator "1" over the communcaiton link 44 to the central controller 42. After the required FRT time of the first distributed power source 14a is elapsed, it will be disconnected and the fault indicator will be changed to "0" using the same criterion. When the last distributed power source 14b is disconnected the central controller 42 sends a reclosing command/message 70 to the recloser 20. In this embodiment, the reclosing is triggered by the reclosing command 70.

The functional modules may be implemented as programmed software modules or procedures, respectively; however, one skilled in the art will understand that the functional modules may be implemented fully or partially in hardware.

While the invention has been illustrated and described in detail in the drawings and foregoing description, such illustration and description are to be considered illustrative or exemplary and not restrictive; the invention is limited by the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: power distribution network
- 12: main power source
- 14, 14a, 14b: distributed power source
- 16: distribution feeder
- 18: power consumer
- 20a, 20b: circuit breaker
- 20c, 20d: recloser
- 22: trip signal
- 24: switching device
- 30: FRT characteristic
- 40: system
- 42: central controller
- 44: communication network
- 46: controller
- 48, 48a, 48b: controller
- 50, 50a, 50b: controller
- 52: substation computer
- 54: recloser adaption engine
- 56: network connectivity model
- 60: measurement module
- 62: sensor
- 64: fault presence indicator message module
- 66: state message
- 68: fault message
- 70: closing message

## Claims

1. A method for operating a recloser (20) of an electrical power distribution network (10), the power distribution network (10) interconnecting a main power source (12) and distributed power sources (14), the method comprising the steps of:
determining states of the distributed power sources (14),
upon occurrence of a fault in the power distribution network (10) that causes the recloser (20) to open, delaying a reclosing operation of the recloser (20) for a delay time depending on the states of the distributed power sources (14),
wherein the state of a distributed power source (14) indicates whether the distributed power source (14) is connected to the power distribution network (10), and
wherein the method further comprises the steps of
determining states of switching devices (20, 24) of the power distribution network (10),
determining an actual network topology of the power distribution network (10) from the states of the switching devices (20, 24),
estimating a residual voltage of the power distribution network (10) at each distributed power source (14) from the actual topology of the power distribution network (10),
determining a minimum connect time for each of the distributed power sources (14) from the residual voltage, and
setting the delay time to the longest minimum connect time.

2. The method of claim 1, comprising the steps of:
determining the state of a distributed power source (14) by a controller (48) of the distributed power source (14),
sending the state of the distributed power source (14) with a message (66) over a data communication network (44) to a central controller (42).

3. The method of claim 1,
wherein the state of the distributed power source (14) comprises fault data, the fault data indicating, whether there is a fault in the power distribution network (10) at the distributed power source (14),
wherein the reclosing of the recloser (20) is delayed until all states of the distributed power sources (14) indicate no fault.

4. The method of claim 3,
wherein the fault data is determined by:
measuring the current and/or voltage at the connection point of the distributed power source with the power distribution network (10),
setting the fault data to indicating a fault, when a change in the current and/or voltage has been measured that exceeds a predefined change rate.

5. A use of a method of one of the claims 1 to 4 for operating a recloser of an electrical power distribution network in which a power supplied by distributed power sources is at least 5% to 10% of a total power of the power distribution network.

6. A computer-readable medium, in which a computer program for operating a recloser (20) is stored, which, when being executed by a processor, is adapted to carry out the steps of the method of one of claims 1 to 4.

7. A system (40) for operating a recloser (20) of an electrical power distribution network (10), the power distribution network (10) interconnecting a main power source (12) and distributed power sources (14), the system comprising:
local controllers (48) for determining states of the distributed power sources and states of switching devices (20, 24) of the power distribution network (10),
a central controller (42) for receiving the states of the distributed power sources and the states of switching devices (20, 24) of the power distribution network (10) from the local controllers (48),
a recloser controller (46) for detecting the occurrence of a fault in the network (10) and causing a recloser (20) to open,
wherein the central controller (42) is adapted for determining a minimum delay time for delaying the reclosing of the recloser (20) dependent on the states of the distributed power sources (14) and for sending a message indicating the delay time to the recloser controller (20),
wherein the state of a distributed power source (14) indicates whether the distributed power source (14) is connected to the power distribution network (10),
wherein the central controller is further adapted to
determine an actual network topology of the power distribution network (10) from the states of the distributed power sources and the states of the switching devices (20, 24) of the power distribution network (10),
estimate a residual voltage of the power distribution network (10) at each distributed power source (14) from the actual topology of the power distribution network (10),
determine a minimum connect time for each of the distributed power sources (14) from the residual voltage, and
set the minimum delay time to the longest minimum connect time.

## Patentansprüche

1. Verfahren für den Betrieb eines Reclosers (20) eines Stromverteilungsnetzes (10), wobei das Stromverteilungsnetz (10) eine Hauptstromquelle (12) und dezentrale Stromquellen (14) miteinander verbindet, wobei das Verfahren die folgenden Schritte aufweist:
Bestimmen von Zuständen der dezentralen Stromquellen (14),
beim Auftreten eines Fehlers in dem Stromverteilungsnetz (10), der das Öffnen des Reclosers (20) bewirkt, Verzögern eines Wiedereinschaltungsbetriebs des Reclosers (20) während einer Verzögerungszeit in Abhängigkeit von den Zuständen der dezentralen Stromquellen (14),
wobei der Zustand einer dezentralen Stromquelle (14) angibt, ob die dezentrale Stromquelle (14) mit dem Stromverteilungsnetz (10) verbunden ist, und
wobei das Verfahren ferner die folgenden Schritte aufweist:
Bestimmen von Zuständen von Schaltvorrichtungen (20, 24) des Stromverteilungsnetzes (10), Bestimmen einer tatsächlichen Netztopologie des Stromverteilungsnetzes (10) von den Zuständen der Schaltvorrichtungen (20, 24),
Schätzen einer Restspannung des Stromverteilungsnetzes (10) an jeder dezentralen Stromquelle (14) von der tatsächlichen Topologie des Stromverteilungsnetzes (10),
Bestimmen einer Mindestverbindungszeit für jede der dezentralen Stromquellen (14) von der Restspannung, und
Einstellen der Verzögerungszeit auf die längste Mindestverbindungszeit.

2. Verfahren nach Anspruch 1, das die folgenden Schritte aufweist:
Bestimmen des Zustands einer dezentralen Stromquelle (14) durch eine Steuereinrichtung (48) der dezentralen Stromquelle (14),
Senden des Zustands der dezentralen Stromquelle (14) mit einer Nachricht (66) über ein Datenkommunikationsnetz (44) an eine zentrale Steuereinrichtung (42).

3. Verfahren nach Anspruch 1,
wobei der Zustand der dezentralen Stromquelle (14) Fehlerdaten aufweist, wobei die Fehlerdaten angeben, ob ein Fehler in dem Stromverteilungsnetz (10) an der dezentralen Stromquelle (14) vorhanden ist,
wobei das Wiedereinschalten des Reclosers (20) verzögert wird, bis alle Zustände der dezentralen Stromquellen (14) keinen Fehler angeben.

4. Verfahren nach Anspruch 3,
wobei die Fehlerdaten durch Folgendes bestimmt werden:
Messen des Stroms und/oder der Spannung an dem Verbindungspunkt der dezentralen Stromquelle mit dem Stromverteilungsnetz (10),
Einstellen der Fehlerdaten auf das Angeben eines Fehlers, wenn eine Änderung in dem Strom und/oder der Spannung gemessen wurde, die eine vordefinierte Änderungsrate überschreitet.

5. Verwendung eines Verfahrens nach einem der Ansprüche 1 bis 4 zum Betrieb eines Reclosers eines Stromverteilungsnetzes, wobei ein Strom, der durch dezentrale Stromquellen geliefert wird, mindestens 5% bis 10% eines Gesamtstroms des Stromverteilungsnetzes beträgt.

6. Computerlesbares Medium, in dem ein Computerprogramm zum Betrieb eines Reclosers (20) gespeichert ist, das, wenn es durch einen Prozessor ausgeführt wird, angepasst ist, um die Schritte des Verfahrens nach einem der Ansprüche 1 bis 4 durchzuführen.

7. System (40) für den Betrieb eines Reclosers (20) eines Stromverteilungsnetzes (10), wobei das Stromverteilungsnetz (10) eine Hauptstromquelle (12) und dezentrale Stromquellen (14) miteinander verbindet, wobei das System Folgendes aufweist:
lokale Steuereinrichtungen (48) zum Bestimmen von Zuständen der dezentralen Stromquellen und Zuständen von Schaltvorrichtungen (20, 24) des Stromverteilungsnetzes (10),
eine zentrale Steuereinrichtung (42) zum Empfangen der Zustände der dezentralen Stromquellen und der Zustände von Schaltvorrichtungen (20, 24) des Stromverteilungsnetzes (10) von der lokalen Steuereinrichtung (48),
eine Recloser-Steuereinrichtung (46) zum Ermitteln des Auftretens eines Fehlers in dem Netz (10) und Bewirken des Öffnens eines Reclosers (20),
wobei die zentrale Steuereinrichtung (42) angepasst ist, um eine Mindestverzögerungszeit zum Verzögern des Wiedereinschaltens des Reclosers (20) in Abhängigkeit von den Zuständen der dezentralen Stromquellen (14) zu bestimmen und um eine Nachricht, die die Verzögerungszeit angibt, an die Recloser-Steuereinrichtung (20) zu senden,
wobei der Zustand einer dezentralen Stromquelle (14) angibt, ob die dezentrale Stromquelle (14) mit dem Stromverteilungsnetz (10) verbunden ist,
wobei die zentrale Steuereinrichtung ferner für Folgendes angepasst ist:
Bestimmen einer tatsächlichen Netztopologie des Stromverteilungsnetzes (10) von den Zuständen der dezentralen Stromquellen und den Zuständen der Schaltvorrichtungen (20, 24) des Stromverteilungsnetzes (10),
Schätzen einer Restspannung des Stromverteilungsnetzes (10) an jeder dezentralen Stromquelle (14) von der tatsächlichen Topologie des Stromverteilungsnetzes (10),
Bestimmen einer Mindestverbindungszeit für jede der dezentralen Stromquellen (14) von der Restspannung, und
Einstellen der Mindestverzögerungszeit auf die längste Mindestverbindungszeit.

## Revendications

1. Procédé pour actionner un disjoncteur réenclencheur (20) d'un réseau de distribution d'énergie électrique (10), ce réseau de distribution d'énergie (10) interconnectant une source d'énergie principale (12) et des sources d'énergie distribuée (14), ce procédé comprenant les étapes consistant à :
déterminer les états des sources d'énergie distribuée (14),
lors de l'occurrence d'un défaut dans le réseau de distribution d'énergie (10) qui entraîne l'ouverture du disjoncteur réenclencheur (20), le retardement de l'actionnement de refermeture du disjoncteur réenclencheur (20) pendant un temps de retard dépendant des états des sources d'énergie distribuée (14),
dans lequel l'état d'une source d'énergie distribuée (14) indique si cette source d'énergie distribuée (14) est connectée au réseau de distribution d'énergie (10), et
ce procédé comprenant en outre les étapes consistant à :
déterminer les états des dispositifs de commutation (20, 24) du réseau de distribution d'énergie (10),
déterminer une topologie réelle de réseau du réseau de distribution d'énergie (10) à partir des états des dispositifs de commutation (20, 24),
estimer une tension résiduelle du réseau de distribution d'énergie (10) à chaque source d'énergie distribuée (14) à partir de la topologie réelle du réseau de distribution d'énergie (10),
déterminer un temps de connexion minimum pour chacune des sources d'énergie distribuée (14) à partir de la tension résiduelle, et à
régler le temps de retard sur le temps de connexion minimum le plus long.

2. Procédé selon la revendication 1, comprenant les étapes consistant à :
déterminer l'état d'une source d'énergie distribuée (14) au moyen d'un contrôleur (48) de la source d'énergie distribuée (14),
envoyer l'état de la source d'énergie distribuée (14) avec un message (66) sur un réseau de communication de données (44) à un contrôleur central (42).

3. Procédé selon la revendication 1,
dans lequel l'état de la source d'énergie distribuée (14) comprend des données de défaut, ces données de défaut indiquant s'il y a un défaut dans le réseau de distribution d'énergie (10) à la source d'énergie distribuée (14),
dans lequel le réenclenchement du disjoncteur réenclencheur (20) est retardé jusqu'à ce que tous les états des sources d'énergie distribuée (14) n'indiquent aucun défaut.

4. Procédé selon la revendication 3,
dans lequel les données de défaut sont déterminées en :
mesurant le courant et/ou la tension au point de connexion de la source d'énergie distribuée avec le réseau de distribution d'énergie (10),
réglant les données de défaut sur l'indication d'un défaut, lorsqu'un changement dans le courant et/ou la tension qui dépasse une vitesse de changement prédéfinie a été mesuré.

5. Utilisation d'un procédé selon une des revendications 1 à 4 pour actionner un disjoncteur réenclencheur d'un réseau de distribution d'énergie dans lequel une énergie alimentée par des sources d'énergie distribuée est au moins 5 % à 10 % d'une énergie totale du réseau de distribution d'énergie.

6. Support lisible par ordinateur, sur lequel est stocké un programme informatique pour actionner un disjoncteur réenclencheur (20) qui, lorsqu'il est en train d'être exécuté par un processeur, est adapté de façon à exécuter les étapes du procédé selon les revendications 1 à 4.

7. Système (40) pour actionner un disjoncteur réenclencheur (20) d'un réseau de distribution d'énergie (10), ce réseau de distribution d'énergie (10) interconnectant une source d'énergie principale (12) et des sources d'énergie distribuée (14), ce système comprenant :
des contrôleurs locaux (48) pour déterminer les états des sources d'énergie distribuée et les états des dispositifs de commutation (20, 24) du réseau de distribution d'énergie (10),
un contrôleur central (42) pour recevoir les états des sources d'énergie distribuée et les états des dispositifs de commutation (20, 24) du réseau de distribution d'énergie (10) depuis le contrôleur local (48),
un contrôleur de disjoncteur réenclencheur (46) pour détecter l'occurrence d'un défaut dans le réseau (10) et pour entraîner l'ouverture d'un disjoncteur réenclencheur (20),
dans lequel le contrôleur central (42) est adapté de façon à déterminer un temps de retard minimum pour retarder le réenclenchement du disjoncteur réenclencheur (20) dépendant des états des sources d'énergie distribuée (14) et pour envoyer un message indiquant le temps de retard au contrôleur du disjoncteur réenclencheur (20),
dans lequel l'état d'une source d'énergie distribuée (14) indique si la source d'énergie distribuée (14) est connectée au réseau de distribution d'énergie (10),
dans lequel le contrôleur central est adapté en outre de façon à
déterminer une topologie réelle de réseau du réseau de distribution d'énergie (10) à partir des états des sources d'énergie distribuée et des états des dispositifs de commutation (20, 24) du réseau de distribution d'énergie (10),
estimer une tension résiduelle du réseau de distribution d'énergie (10) à chaque source d'énergie distribuée (14) à partir de la topologie réelle du réseau de distribution d'énergie (10),
déterminer un temps de connexion minimum pour chacune des sources d'énergie distribuée (14) à partir de la tension résiduelle, et à
régler le temps de retard minimum sur le temps de connexion minimum le plus long.
